# EUROPÄISCHE PATENTSCHRIFT

(11) **EP 1 975 466 B1**
(45) Veröffentlichungstag und Bekanntmachung des Hinweises auf die Patenterteilung: **19.09.2012**
(21) Anmeldenummer: 08004798.8
(22) Anmeldetag: 14.03.2008
(51) Int. Cl.: F16H 45/02

(54) **Hydrodynamische Kopplungsvorrichtung**
Hydrodynamic coupling device
Dispositif d'embrayage hydrodynamique

(30) Priorität: 26.03.2007 DE 102007014311
(43) Veröffentlichungstag der Anmeldung: 01.10.2008
(60) Teilanmeldung: 12164973.5
(73) Patentinhaber: ZF Friedrichshafen AG, 88038 Friedrichshafen (DE)
(72) Erfinder: Frey, Peter, 97447 Gerolzhofen (DE); Baumann, Roland, 97456 Dittelbrunn (DE); Greulich, Michael, Dr., 97525 Schwebheim (DE); Mencher, Georg, 97506 Grafenrheinfeld (DE); Reinhardt, Bernd, 97453 Schonungen/Forst (DE); Hammer, Peter, 97421 Schweinfurt (DE); Rediger, Patrick, 97421 Schweinfurt (DE)

(56) Entgegenhaltungen:
- WO-A1-01/36845
- WO-A2-2008/077376
- DE-A1- 19 953 172
- DE-A1-102007 052 484
- DE-C2- 19 758 677

## Beschreibung

Die Erfindung betrifft eine hydrodynamische Kopplungsvorrichtung gemäß dem Oberbegriff des Anspruches 1.

In der DE 199 53 172 A1 ist eine hydrodynamische Kopplungsvorrichtung behandelt, die in einem Kupplungsgehäuse über einen hydrodynamischen Kreis verfügt, gebildet durch ein Pumpenrad, ein Turbinenrad und ein Leitrad(19), sowie über eine Überbrückungskupplung, die einen mit einer antriebsseitigen Gehäusewandung des Kupplungsgehäuses verbindbaren, in Achsrichtung zu einer Auslenkbewegung befähigten Kolben aufweist. Das Turbinenrad steht zumindest in Achsrichtung mit einer Nabe in Wirkverbindung, die mit einem Abtrieb drehverbunden ist, und sich einerseits an einem Freilauf des Leitrades und andererseits über ein Strömungsleitelement an der antriebsseitigen Gehäusewandung des Kupplungsgehäuses in axialer Wirkverbindung abstützt. Die antriebsseitige Gehäusewandung ist zur Bildung dieser Axialabstützung bis an eine Drehachse des Kupplungsgehäuses nach radial innen gezogen, so dass das Strömungsleitelement mit seinem der antriebsseitigen Gehäusewandung zugewandten, als Axiallagerungsbereich ausgebildeten antriebsseitigen Ende in Axialanlage mit einer Axiallagerung versetzbar ist, die als Axialanlagefläche an der antriebsseitigen Gehäusewandung vorgesehen ist.

Die hydrodynamische Kopplungsvorrichtung ist mit einer Mehrzahl abtriebsseitiger Strömungswege ausgebildet, von denen ein erster abtriebsseitiger Strömungsweg mittels ersten Strömungsdurchlässen, die im Strömungsleitelement vorgesehen sind, mit einem Druckraum verbunden ist, der durch die antriebsseitige Gehäusewandung des Kupplungsgehäuses und den Kolben begrenzt ist, während ein zweiter abtriebsseitiger Strömungsweg mittels zweiter Strömungsdurchlässe, die in einer Druckscheibe axial zwischen der Nabe und dem Freilauf des Leitrades vorgesehen sind, mit einem Versorgungsraum verbunden ist, der an die vom Druckraum abgewandte Seite des Kolbens angrenzt.

Durch Anordnung der zweiten Strömungsdurchlässe in der Druckscheibe ist frisches Fluid unmittelbar in den hydrodynamischen Kreis einleitbar. Von diesem Fluid gelangt auch ein Anteil vom hydrodynamischen Kreis zum Kolben der Überbrückungskupplung, an welchem insbesondere dann, wenn der Kolben mit Schlupf gegenüber der antriebsseitigen Gehäusewandung des Kupplungsgehäuses betrieben wird, Wärme entsteht, die abtransportiert werden muss. Da allerdings lediglich ein Anteil des frischen Fluids zu dem Kolben gelangt, ist die Kühlung begrenzt.

Ein weiteres Problem ergibt sich beim Einrücken der Überbrückungskupplung durch Aufbau eines Überdruckes in dem den hydrodynamischen Kreis enthaltenden Kühlraum gegenüber dem Druckraum. Aufgrund des großen Volumens des Kühlraumes muss eine erhebliche Fluidmenge über die zweiten Strömungsdurchlässe zugeführt werden, um den erforderlichen Überdruck zu erzeugen, so dass der Druckaufbau entsprechend lange andauert. Außerdem sind, ebenfalls bedingt durch das große Volumen des Druckraums, Druckschwankungen nicht auszuschließen, die sich im Hinblick auf die Kontinuität der am Kolben aufgebrachten Anpresskraft nachteilig auswirken können.

Die Strömungsdurchlässe im Strömungsleitelement sind als Nuten an dem der antriebsseitigen Gehäusewandung des Kupplungsgehäuses zugewandten Ende des Strömungsleitelementes vorgesehen. Dadurch wird zwar eine Schmierung der zueinander relativ bewegten Bauteile Gehäusewandung/Strömungsleitelement erzielt, jedoch sind die Nuten nicht nur mit großer Erstreckungslänge ausgebildet, sondern auch mehrfach umgelenkt, was sich im Hinblick auf den für die Beaufschlagung des Druckraums benötigten Zeitraums nachteilig auswirkt.

Auch die WO 01/36845 A1 behandelt eine hydrodynamische Kopplungsvorrichtung, bei welcher die zur Aufnahme eines Turbinenrades vorgesehene Nabe über ein Strömungsleitelement an der antriebsseitigen Gehäusewandung des Kupplungsgehäuses in Anlage kommt. Bei dieser Veröffentlichung trägt die Nabe ein Bauteil eines Torsionsschwingungsdämpfers, während das Strömungsleitelement den Kolben einer Überbrückungskupplung aufnimmt. Zwischen dem Strömungsleitelement und dem Kolben ist eine erste Abdichtung wirksam, und zwischen dem Strömungsleitelement und einem Abtrieb eine zweite Abdichtung, wobei für jede dieser Abdichtungen jeweils eine Dichtungsausnehmung vorgesehen ist, in welcher jeweils ein Elastomerring eingesetzt ist. Das Strömungsleitelement kann sowohl mit der antriebsseitigen Gehäusewandung des Kupplungsgehäuses als auch mit der Nabe in drehfester Verbindung stehen, und zwar jeweils mittels einer Verzahnung. Das Strömungsleitelement verfügt an seinem der antriebsseitigen Gehäusewandung zugewandten Ende über Strömungsdurchlässe in Form von Nutungen.

Die DE 10 2007 052 484 A1 sowie die WO 2008/077376 A2 behandeln ebenfalls jeweils hydrodynamische Kopplungsvorrichtungen, bei welchen die zur Aufnahme eines Turbinenrades vorgesehene Nabe über ein Strömungsleitelement an der antriebsseitigen Gehäusewandung des Kupplungsgehäuses in Anlage kommt. Bei der DE 10 2007 052 484 A1 sind die Strömungsdurchlässe im Strömungsleitelement als radiale Durchgangsbohrungen ausgebildet, während das Strömungsleitelement bei der WO 2008/077376 A2 über zwei unterschiedliche Strömungsdurchlässe verfügt, von denen erste Strömungsdurchlässe mit einem Druckraum axial zwischen der antriebsseitigen Gehäusewandung des Kupplungsgehäuses und einem Kolben in Wirkverbindung stehen, und zweite Strömungsdurchlässe mit demjenigen Raum, welcher den hydrodynamischen Kreis umfasst.

Aus der DE 197 58 677 C2 ist eine hydrodynamische Kopplungsvorrichtung bekannt, die als hydrodynamischer Drehmomentwandler ausgebildet ist. Durch ein Pumpenrad wird im Zusammenwirken mit einem Turbinenrad und einem Leitrad ein hydrodynamischer Kreis in einem Kupplungsgehäuse gebildet, der mit einer Überbrückungskupplung zusammenwirkt. Die Überbrückungskupplung weist einen mit einer antriebsseitigen Gehäusewandung des Kupplungsgehäuses verbindbaren, in Achsrichtung zu einer Auslenkbewegung befähigten Kolben auf, der über eine Abdichtung einer an der antriebsseitigen Gehäusewandung befestigten Gehäusenabe zugeordnet ist. Diese als Bauteil des Kupplungsgehäuses wirksame Gehäusenabe dient als Axialanschlag für eine das Turbinenrad und eventuell auch ein Bauteil eines Torsionsschwingungsdämpfers aufnehmende Nabe, die hierfür an ihrer der Gehäusenabe zugewandten Seite mit einem Anschlagelement versehen ist, und sich mit ihrer axialen Gegenseite über eine Axiallagerung an dem als Bauteil des hydrodynamischen Kreises vorgesehenen Leitrad abstützt.

In der Gehäusenabe sind erste Strömungskanäle und in dem der Nabe zugeordneten Anschlagelement zweite Strömungskanäle vorgesehen. Die Strömungskanäle der Gehäusenabe stehen mit ersten Strömungsdurchlässen der Nabe in Strömungsverbindung, die Strömungskanäle des Abstandselementes dagegen mit zweiten Strömungsdurchlässen der Nabe, wobei die ersten Strömungsdurchlässe mit Axialversatz gegenüber den zweiten Strömungsdurchlässen vorgesehen sind. Über die ersten Strömungsdurchlässe wird wenigstens ein erster abtriebsseitiger Strömungsweg mit einem Druckraum, der zumindest im wesentlichen durch die antriebsseitige Gehäusewandung des Kupplungsgehäuse sowie den Kolben begrenzt ist, verbunden, und über die zweiten Strömungsdurchlässe zumindest ein zweiter abtriebsseitiger Strömungsweg mit einem Versorgungsraum, der an die vom Druckraum abgewandte Seite des Kolbens angrenzt.

Nachteilig bei der bekannten hydodynamischen Kopplungsvorrichtung ist der beträchtliche Aufwand, der sich durch die an der antriebsseitigen Gehäusewandung befestigte Gehäusenabe ergibt, da diese nicht nur in Achsrichtung so dimensioniert sein muss, dass sie die das Turbinenrad und/oder ein Bauteil des Torsionsschwingungsdämpfers aufnehmende Nabe axial gegenüber dem Leitrad positioniert, sondern darüber hinaus auch radial so bemessen sein muss, dass sie zum einen die Nabe zentriert, und zum anderen den Kolben der Überbrückungskupplung.

Außerdem muss dafür gesorgt sein, dass die Strömungskanäle der Gehäusenabe zumindest im Wesentlichen mit den Strömungsdurchgängen der Nabe fluchten. Überdies ist die das Turbinenrad und/oder ein Bauteil des Torsionsschwingungsdämpfers aufnehmende Nabe aufgrund ihrer komplizierten geometrischen Ausgestaltung, in der zudem auch die ersten und die zweiten Srömungsdurchlässe vorgesehen sein sollen, fertigungstechnisch und kostenmäßig aufwändig herstellbar.

Der Erfindung liegt die Aufgabe zugrunde, eine hydrodynamische Kopplungsvorrichtung, die über eine ein Turbinenrad und/oder ein Bauteil eines Torsionsschwingungsdämpfers aufnehmende Nabe sowie über einen Kolben einer Überbrückungskupplung innerhalb eines Kupplungsgehäuses verfügt, so auszubilden, dass die Kühlungseigenschaften für den Kolben bestmöglich sind, und gleichzeitig die Kontinuität der am Kolben aufgebrachten Anpresskraft gewährleistet ist. Weiterhin soll sichergestellt sein, dass Strömungsdurchlässe die Zuführung frischen Fluids behinderungsfrei gewährleisten, und dennoch Bereiche der hydrodynamischen Kopplungsvorrichtung, die zueinander relativ bewegbar sind, einer wirksamen Schmierung unterworfen sind.

Diese Aufgabe wird erfindungsgemäß durch die in den Ansprüchen 1 oder 6 angegebenen Merkmale gelöst.

Bevor im Einzelnen auf die Ausbildung der Nabe sowie des derselben zugeordneten Strömungsleitelementes eingegangen wird, sollen deren Funktionen in der hydrodynamischen Kopplungsvorrichtung präzisiert werden. Die Nabe kann zur unmittelbaren Aufnahme des Turbinenrades und/oder eines Bauteils eines Torsionsschwingungsdämpfers dienen, oder aber zur mittelbaren Aufnahme des Turbinenrades, beispielsweise über ein Bauteil des Torsionsschwingungsdämpfers, oder aber zur mittelbaren Aufnahme eines Bauteils des Torsionsschwingungsdämpfers, beispielsweise über das Turbinenrad. Daher wird diese Nabe nachfolgend kurz als Trägernabe bezeichnet. Die Funktion des Strömungsleitelementes ergibt sich in erfindungsgemäßer Weise zum einen durch die an demselben vorgesehenen Strömungsdurchlässe, zum anderen aber auch aufgrund seiner axialen Positionierung zwischen der Trägernabe und einer antriebsseitigen Gehäusewandung eines Kupplungsgehäuses der hydrodynamischen Kopplungsvorrichtung.

Die antriebsseitige Gehäusewandung des Kupplungsgehäuses ist entweder als Axiallagerung für das Strömungsleitelement und damit auch für die Trägernabe wirksam, oder aber der antriebsseitigen Gehäusewandung ist eine Axiallagerung für die Trägernabe zugeordnet. Im erstgenannten Fall kommt der der antriebsseitigen Gehäusewandung zugewandte Axiallagerungsbereich des Strömungsleitelementes in Axialanlage an einer Axialanlagefläche der antriebsseitigen Gehäusewandung, im anderen Fall an der der antriebsseitigen Gehäusewandung zugeordneten Axiallagerung. Wesentlich ist, dass bei beiden möglichen Ausgestaltungen jeweils auf eine Gehäusenabe, die an der antriebsseitigen Gehäusewandung befestigt werden müsste, verzichtet werden kann.

Mit besonderem Vorzug weist die antriebsseitige Gehäusewandung zur Bildung der Axialanlagefläche eine Axialausnehmung in der antriebsseitigen Gehäusewandung auf. Wenn diese Axialausnehmung in Radialrichtung größer ausgebildet ist als die radiale Erstreckungsweite des Strömungsleitelementes, so ist das letztgenannte mit seinem der antriebsseitigen Gehäusewandung zugewandten Axiallagerungsbereich zwar axial sauber abgestützt, findet aber dennoch radialen Raum, um auch bei ungünstiger radialer Toleranzüberlagerung des Strömungsleitelementes mit einem Abtrieb, wie einer Getriebeeingangswelle, in die Axialausnehmung eingreifen zu können. Durch im wesentlichen bogenförmige Ausführung des Überganges von der Axialanlagefläche innerhalb der Axialausnehmung zum benachbarten Radialbereich der antriebsseitigen Gehäusewandung besteht selbst bei extremen Toleranzbedingungen die Möglichkeit, diesem Axiallagerungsbereich des Strömungsleitelementes geeignete Axaillagerungsbedingungen zu verschaffen.

Bei Zuordnung eines Axialanlagerelementes zur antriebsseitigen Gehäusewandung, insbesondere zur Axialausnehmung derselben, wird, sofern dieses Axialanlagerelement mit einem großen Härtegrad ausgewählt ist, dafür gesorgt, dass kein Verschleiß an der Axialanlagefläche der antriebsseitigen Gehäusewandung auftritt, und damit die Trägernabe einem ungewollten Spiel in Achsrichtung unterworfen sein könnte. Mit besonderem Vorzug besteht das Axialanlagerelement aus einem Federstahl.

Wenn die Trägernabe über eine Drehsicherung an dem Strömungsleitelement angreift, besteht gegenüber demselben keine Relativdrehbewegung und damit auch nicht das Risiko einer verschleißfördernden Reibung. Es existiert lediglich eine Relativdrehbewegung des Strömungsleitelementes gegenüber der Axiallagerung der antriebsseitigen Gehäusewandung. Die Drehsicherung kann selbstverständlich auch zwischen der Axiallagerung der antriebsseitigen Gehäusewandung und dem Strömungsleitelement bestehen, so dass die Relativdrehbewegung des Strömungsleitelementes sich nun gegenüber der Trägernabe einstellt.

Mit Vorzug ist ein Kolben einer Überbrückungskupplung auf dem Strömungsleitelement zentriert, und in Achsrichtung gegenüber dem Strömungsleitelement verlagerbar. Somit wird auch für den Kolben keine Gehäusenabe benötigt. Durch Zwischenfügung einer Abdichtung zwischen den Kolben und dem Strömungsleitelement ist dafür gesorgt, dass über die beiden im Strömungsleitelement vorgesehenen Strömungspassagen geflossene Strömung nicht von einem der beiden Räume - also Druckraum oder Versorgungsraum - in den jeweils anderen Raum gelangen kann, und damit nicht mehr für den eigentlichen Verwendungszweck verfügbar ist. Aus dem gleichen Grund greift der Abtrieb, mit Vorzug also eine Getriebeeingangswelle, über eine Abdichtung am Strömungsleitelement an. Diese Abdichtung kann, bei Ausbildung als zwischen dem Strömungsleitelement und dem Abtrieb vorgesehener Elastomerring, berührungsbehaftet wirksam sein.

Zugunsten einer funktionalen Trennung der Zu- oder Abführung von Strömungsmittel und der Schmierung des Strömungsleitelementes gegenüber der antriebsseitigen Gehäusewandung kann vorgesehen sein, die ersten Strömungspassagen mit axialem Abstand zum Axiallagerungsbereich des Strömungsleitelementes anzuordnen, während Schmierausnehmungen, die nicht dem Durchgang von Strömungsmittel dienen, unmittelbar an diesem Axiallagerungsbereich vorgesehen sind.

Im folgenden wird ein Ausführungsbeispiel der Erfindung anhand von Zeichnungen näher erläutert. Es zeigt:

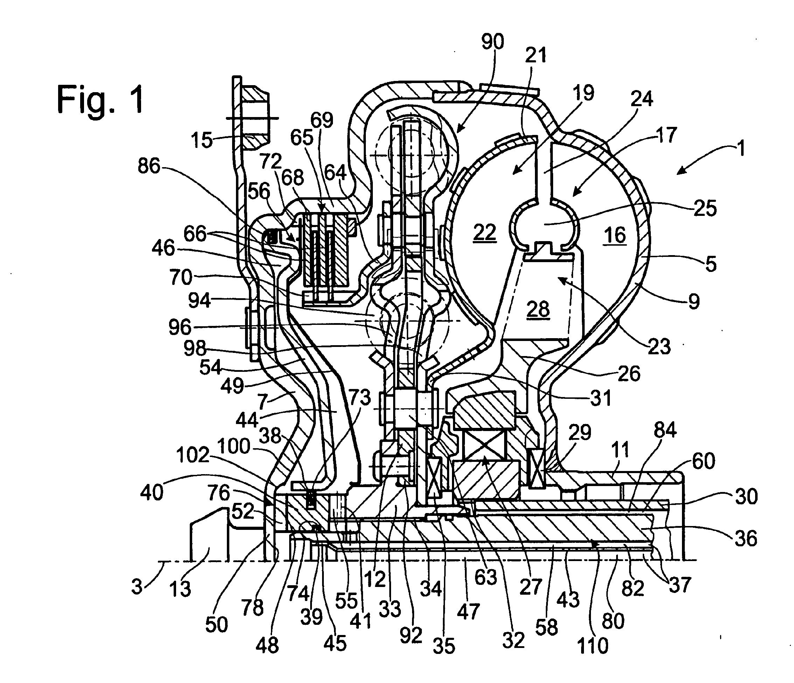

- Fig. 1: die obere Hälfte eines Längsschnittes durch ein Kupplungsgehäuse einer hydrodynamischen Kopplungsvorrichtung mit einer Nabe, die zur Aufnahme eines Torsionsschwingungsdämpfers und eines Turbinenrades über ein Bauteil des Torsionsschwingungsdämpfers dient, sowie eines Strömungsleitelementes, das mit einem Kolben einer Überbrückungskupplung in Wirkverbindung steht,

Im Gegensatz dazu bietet sich allerdings auch die Möglichkeit einer funktionalen Trennung der Zu- oder Abführung von Strömungsmittel und der Schmierung des Strömungsleitelementes gegenüber der antriebsseitigen Gehäusewandung. So kann beispielsweise vorgesehen sein, die ersten Strömungspassagen mit axialem Abstand zum Axiallagerungsbereich des Strömungsleitelementes anzuordnen, während Schmierausnehmungen, die nicht dem Durchgang von Strömungsmittel dienen, unmittelbar an diesem Axiallagerungsbereich vorgesehen sind. Bei einer anderen möglichen Ausgestaltung sind den dem Axiallagerungsbereich des Strömungsleitelementes zugeordneten Schmierausnehmungen erste Strömungspassagen zugeordnet, die nicht im Strömungsleitelement, sondern statt dessen im antriebsseitigen Gehäusedeckel vorgesehen sind, und zwar mit Vorzug an dessen dem Strömungsleitelement zugeordneten Seite.

Im folgenden wird ein Ausführungsbeispiel der Erfindung anhand von Zeichnungen näher erläutert. Es zeigt:
- Fig. 1: die obere Hälfte eines Längsschnittes durch ein Kupplungsgehäuse einer hydrodynamischen Kopplungsvorrichtung mit einer Nabe, die zur Aufnahme eines Torsionsschwingungsdämpfers und eines Turbinenrades über ein Bauteil des Torsionsschwingungsdämpfers dient, sowie eines Strömungsleitelementes, das mit einem Kolben einer Überbrückungskupplung in Wirkverbindung steht,
- Fig. 2: eine vergrößerte Herauszeichnung der Nabe sowie des Strömungsleitelementes, jeweils in Zuordnung zu einem Abtrieb, wie einer Getriebeeingangswelle, und mit Ausbildung einer Abdichtung zwischen dem Strömungsleitelement und dem Abtrieb, und mit einem Strömungsleitelement, das an seiner einer antriebsseitigen Gehäusewandung des Kupplungsgehäuses über Strömungsdurchlässe in Form von Nutungen verfügt,

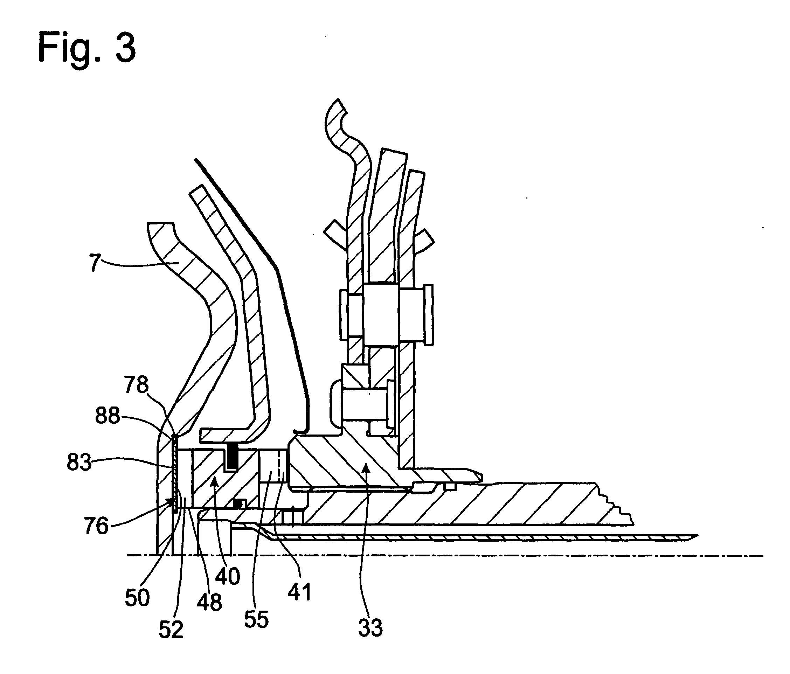

- Fig. 3: eine Herauszeichnung eines zur Axiallagerung des Strömungsleitelementes dienenden Abschnittes des Kupplungsgehäuses,
- Fig. 4: eine Draufsicht auf die Nabe sowie das Strömungsleitelement von radial außen zur Darstellung einer Drehsicherung zwischen Nabe und Strömungsleitelement,
- Fig. 5: wie Fig. 4, aber mit Ausbildung der Drehsicherung zwischen dem Strömungsleitelement und einer Lagerung am Kupplungsgehäuse,
- Fig. 6: wie Fig. 2, aber mit einer anderen Abdichtung zwischen dem Strömungsleitelement und dem Abtrieb,
- Fig. 7: eine Herauszeichnung eines Strömungsleitelementes, wobei dieses über Strömungsdurchlässe sowie über Schmierausnehmungen verfügt,
- Fig. 8: einen Schnitt durch das Strömungsleitelement nach Fig. 7, gesehen aus der Blickrichtung A - A in Fig. 7,
- Fig. 9: eine Draufsicht auf das Strömungsleitelement nach Fig. 7 und 8, und zwar mit Blickrichtung B in Fig. 8, und
- Fig. 10: wie Fig. 2, aber mit einem Strömungsleitelement, das an seiner der antriebsseitigen Gehäusewandung zugewandten Seite über Schmierausnehmungen und in der antriebsseitigen Gehäusewandung überströmungsdurchlässe verfügt.

In Fig. 1 ist eine hydrodynamische Kopplungsvorrichtung 1 dargestellt, ausgebildet als hydrodynamischer Drehmomentwandler. Die hydrodynamische Kopplungsvorrichtung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium aus. Radial innerhalb der Hülse 43 verbleibt ein zentraler Versorgungskanal 47.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung eines Bauteils 12 eines Torsionsschwingungsdämpfers 90 dient, und dieses Bauteil 12 durch eine abtriebsseitige Nabenscheibe 92 des Torsionsschwingungsdämpfers 90 gebildet wird. Diese Nabenscheibe 92 wirkt über einen Umfangsfedersatz 94 mit zwei Deckblechen 96, 98 als weiteren Bauteilen des Torsionsschwingungsdämpfers 90 zusammen, wobei das Deckbleche 98 zur Aufnahme eines Turbinenradfußes 31 mittels einer Nietverbindung 63 dient, während das andere Deckblech 96 zur Befestigung eines Innenlamellenträgers 64 einer Kupplungsvorrichtung 65, die als Lamellenkupplung ausgebildet ist, vorgesehen ist. Die Kupplungsvorrichtung 65 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 über eine als Außenlamellenträger 69 wirksame Verzahnung 72 mit der antriebsseitigen Wandung 7 und damit mit dem Kupplungsgehäuse 5 in Drehverbindung stehen. Die Kupplungsvorrichtung 65 ist mittels eines axial verlagerbaren Kolbens 54 ein- oder ausrückbar, und bildet gemeinsam mit dem Kolben 54 eine Überbrückungskupplung 56 der hydrodynamischen Kopplungsvorrichtung 1. Wie Fig. 1 zeigt, kann zwischen dem Kolben 54 und dem Torsionsschwingungsdämpfer 90 eine Trennplatte 49 vorgesehen sein, die den hydrodynamischen Kreis 24 von einem axial durch den Kolben 54 und die Trennplatte 49 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Axiallagerung 35 am Freilauf 27 ab, und positioniert andererseits ein Strömungsleitelement 40 in Achsrichtung, das mit Vorzug aus Sintermaterial besteht, und mittels einer Drehsicherung 41 mit der Trägernabe 33 in drehfester Verbindung steht. Das Strömungsleitelement 40 kann sich mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

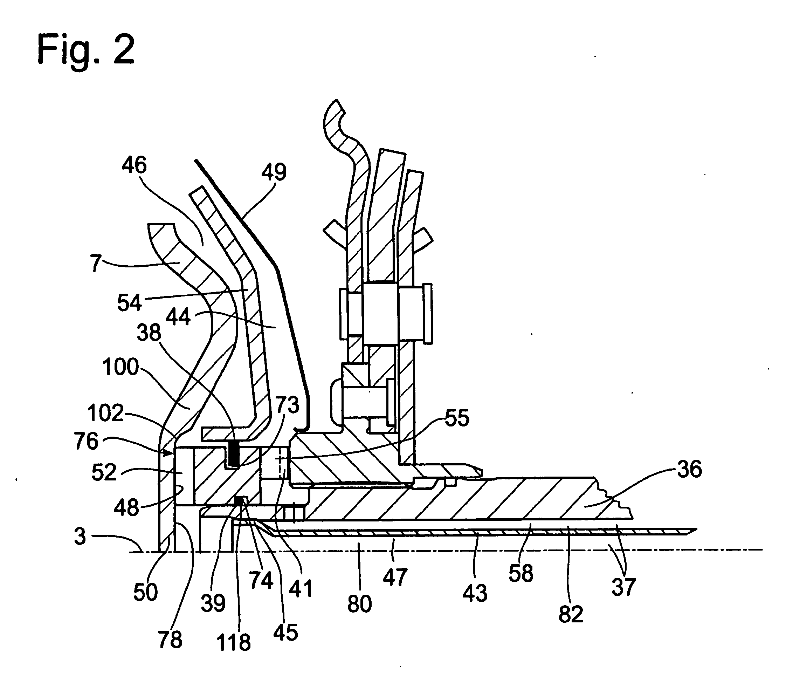

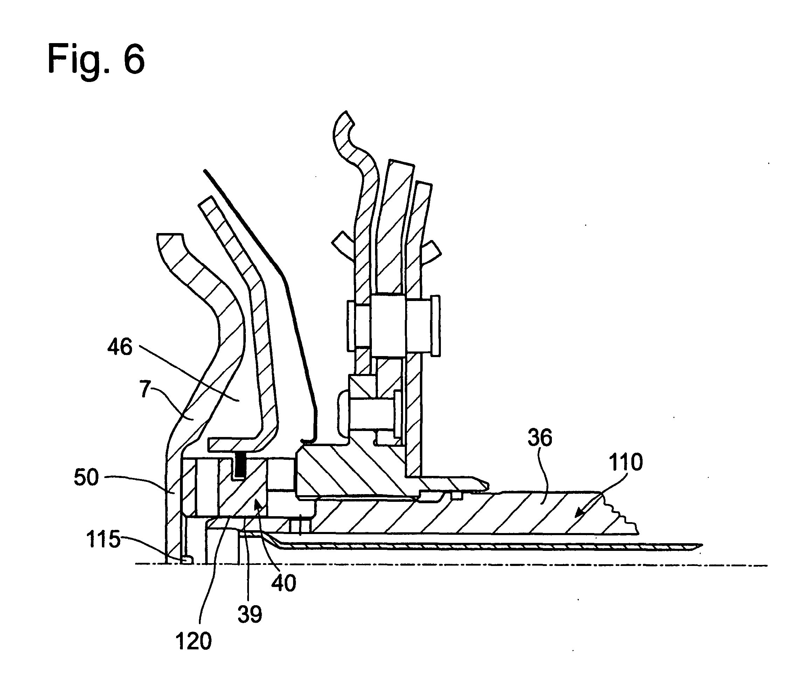

Nach radial innen hin ist das Strömungsleitelement 40 über eine in einer Dichtungsausnehmung 74 (vgl. auch Fig. 2) aufgenommene, durch einen Elastomerring 118 gebildete Abdichtung 39 gegenüber der Getriebeeingangswelle 36 abgedichtet, nach radial außen durch eine in einer Dichtungsausnehmung 73 aufgenommenen Abdichtung 38 gegenüber dem Kolben 54 der Überbrückungskupplung 56. Alternativ kann die Abdichtung 39 gemäß Fig. 6 auch durch einen Dichtspalt 120 radial zwischen der als Abtrieb 110 wirksamen Getriebeeingangswelle 36 und dem Strömungsleitelement 40 gebildet sein.

Durch diese beiden Abdichtungen 38, 39 werden erste Strömungsdurchlässe 52, welche das Strömungsleitelement 40 an seinem Axiallagerungsbereich 48 durchdringen und mit Vorzug als Nutungen 85 (vgl. Fig. 2) im Axiallagerungsbereich 48 ausgebildet sind, von zweiten Strömungsdurchlässen 55, welche im axialen Erstreckungsbereich der Drehsicherung 41 gegenüber der Trägernabe 33 vorgesehen sind, getrennt. Die ersten Strömungsdurchlässe 52 stehen mit dem zentralen Versorgungskanal 47 in der Hülse 43, die als erster abtriebsseitiger Strömungsweg 80 wirksam ist, in Strömungsverbindung, die zweiten Strömungsdurchlässe 55 dagegen mit dem ersten Versorgungskanal 58 radial zwischen der Hülse 43 und der umschließenden Wand der Mittenbohrung 37 der Getriebeeingangswelle 32, wobei dieser Versorgungskanal 58 als zweiter abtriebsseitiger Strömungsweg 82 wirksam ist. Darüber hinaus ist ein zweiter Versorgungskanal 60 radial zwischen der Pumpenradnabe 11 und der Stützwelle 30 vorgesehen, der als dritter abtriebsseitiger Strömungsweg 84 dient.

Der erste abtriebsseitige Strömungsweg 80 dient, über die ersten Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken in Richtung zur Kupplungsvorrichtung 65, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des ersten abtriebsseitigen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden, und sind daher als inhaltlich in die jetzt vorliegende Patentanmeldung aufgenommen zu betrachten.

Der zweite abtriebsseitige Strömungsweg 82 dient, über die Verzahnung 34 und die zweiten Strömungsdurchlässe 55, mit dem Versorgungsraum 44 zur Herstellung eines Überdruckes in demselben gegenüber dem Druckraum 46, und damit zur Druckbeaufschlagung des Kolbens 54 der Überbrückungskupplung 56 zum Ausrücken in von der Kupplungsvorrichtung 65 fortweisender Richtung, wodurch die Reibverbindung zwischen den einzelnen Kupplungselementen 66, 68 der Kupplungsvorrichtung 65 gelöst wird. Zur Herstellung dieses Überdruckes im Versorgungsraum 44 gegenüber dem Druckraum 46 ist eine Verbindung des zweiten abtriebsseitigen Strömungsweges 82 mit der bereits erwähnten Steuervorrichtung und dem ebenfalls genannten Hydraulikflüssigkeitsvorrat erforderlich.

Fluidförmiges Medium, das über den zweiten abtriebsseitigen Strömungsweg 82 sowie die zweiten Strömungsdurchlässe 55 in den Versorgungsraum 44 gelangt ist, tritt, nach Kühlung der Kupplungselemente 66, 68 der Kupplungsvorrichtung 75, in den hydrodynamischen Kreis 24, um von dort aus über den dritten abtriebsseitiger Strömungsweg 84 wieder auszutreten.

Zurückkommend auf die antriebsseitige Gehäusewandung 7 des Kupplungsgehäuses 5, ist bei dieser die als Axiallagerung 76 wirksame Axialanlagefläche 50 im radialen Erstreckungsbereich einer Axialausnehmung 78 vorgesehen, die mittels eines Bogenverlaufs 102 in den radial benachbarten Bereich 100 der antriebsseitigen Gehäusewandung 7 übergeht. Die Axialausnehmung 78 ist hierbei radial größer als die Radialerstreckung des Axiallagerungsbereichs 48 des Strömungsleitelementes 40, so dass selbst ungünstige Radialtoleranzen bei der Positionierung der Getriebeeingangswelle 36 und/oder des Strömungsleitelementes 40 bezüglich der Axiallagerung des Strömungsleitelementes 40 problemfrei verkraftet werden können.

Die Trägernabe 33 kann mittels eines Sinterverfahrens hergestellt sein und daher aus einem Sintermetall bestehen. Auf diese Weise ist nicht nur eine aufwändige Geometrie der Trägernabe 33 problemlos herstellbar, sondern darüber hinaus weist die Trägernabe 33 auch eine vergleichsweise hohe Festigkeit auf. Dies gilt auch für das Strömungsleitelement 40 bei Ausbildung desselben aus Sintermaterial. Um trotz der hohen Festigkeit des Strömungsleitelementes 40 auch an der antriebsseitigen Gehäusewandung 7 erhöhten Verschleiß zu vermeiden, kann es sinnvoll sein, in die Axialausnehmung 78 ein Axialanlagerelement 83 einzubringen, das bevorzugt aus einem Werkstoff großer Härte, wie beispielsweise einem Federstahl, besteht, um dieses Axialanlagerelement 83 als Axiallagerung 76 für den Axiallagerungsbereich 48 des Strömungsleitelementes 40 zu verwenden. Dieses Axialanlagerelement 83 weist hierzu an seiner dem Axiallagerungsbereich 48 des Strömungsleitelementes 40 zugewandten Seite die benötigte Axialanlagefläche 50 auf. Das Axialanlagerelement 83 kann drehgesichert an der antriebsseitigen Gehäusewandung 7 aufgenommen sein, beispielsweise mittels einer Verzahnung 88.

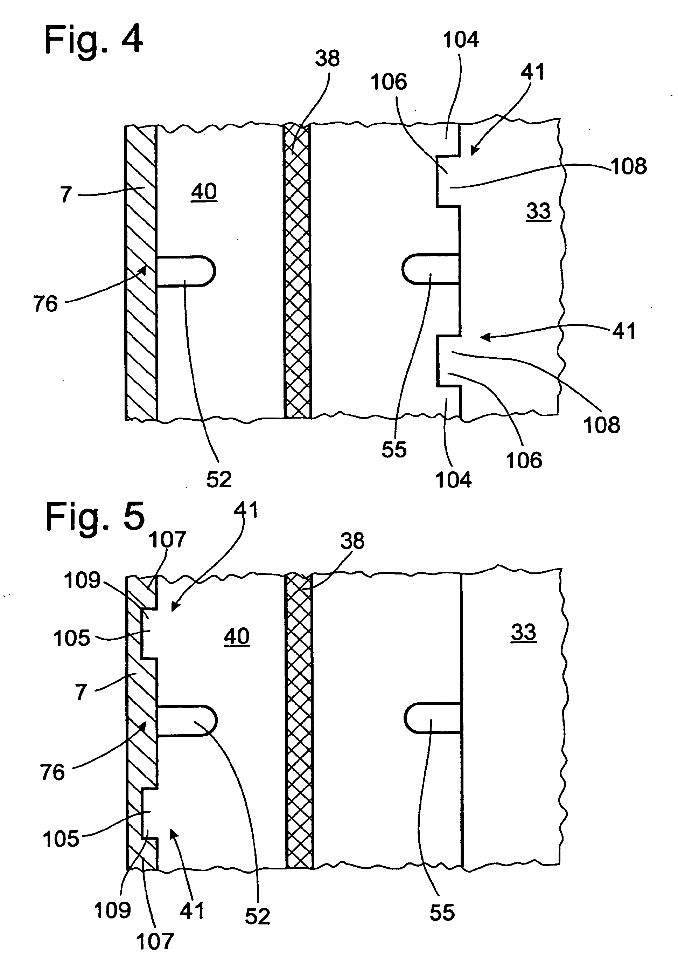

Es ist bereits auf die Anwesenheit der Drehsicherung 41 zwischen der Trägernabe 33 und dem Strömungsleitelement 40 hingewiesen worden. Als mögliche Ausführung für eine derartige Drehsicherung 41 wird auf Fig. 4 verwiesen, in welcher die Drehsicherung 41 durch Draufsicht auf Trägernabe 33 und Strömungsleitelement 40 ersichtlich ist. Die Drehsicherung 41 wird durch eine zwischen Trägernabe 33 und Strömungsleitelement 40 wirksame Verzahnung 108 gebildet, die zum einen an der der Trägernabe 33 zugewandten Seite des Strömungsleitelementes 40 über Verzahnungselemente 104 verfügt, und zum anderen an der dem Strömungsleitelement 40 zugewandten Seite der Trägernabe 33 über Verzahnungselemente 106.

Ebenso kann die Drehsicherung 41 allerdings zwischen der Axiallagerung 76 der antriebsseitigen Gehäusewandung 7 und dem Strömungsleitelement 40 vorgesehen sein. Eine mögliche Ausführung hierfür ist in Fig. 5 gezeigt. Die Drehsicherung 41 wird durch eine zwischen Axiallagerung 76 und Strömungsleitelement 40 wirksame Verzahnung 109 gebildet, die zum einen an der der Axiallagerung 76 zugewandten Seite des Strömungsleitelementes 40 über Verzahnungselemente 105 verfügt, und zum anderen an der dem Strömungsleitelement 40 zugewandten Seite der Axiallagerung 76 über Verzahnungselemente 107.

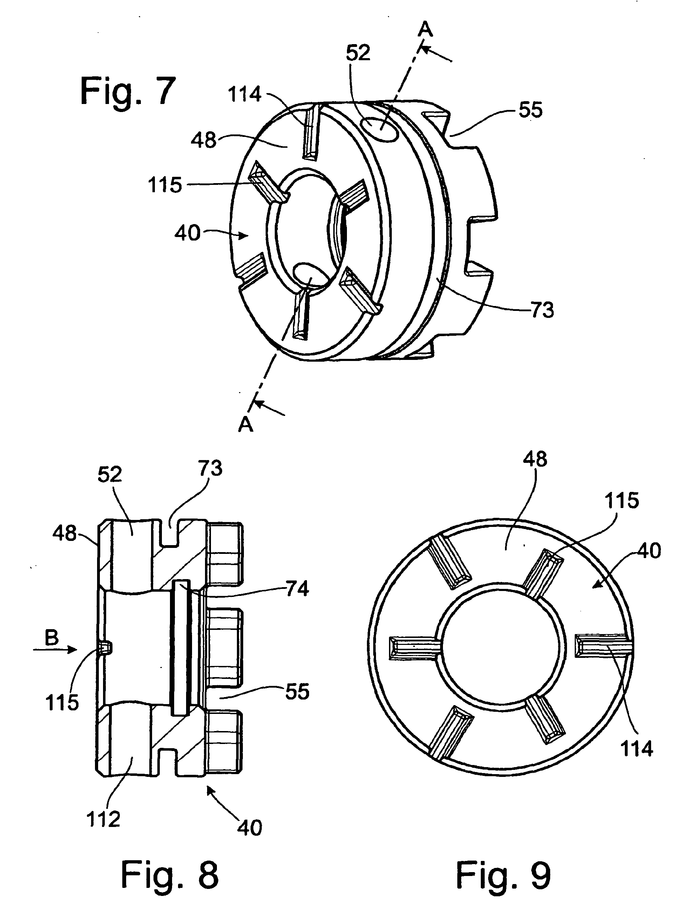

Eine andere Ausführung des Strömungsleitelementes 40 ist in Fig. 7 bis 9 dargestellt. Wie insbesondere Fig. 7, in welcher das Strömungsleitelement 40 in perspektivischer Darstellung gezeigt ist, erkennen lässt, sind nicht nur erste Strömungsdurchlässe 52 und, mit Axialversatz zu diesen, zweite Strömungsdurchlässe 55 vorgesehen, sondern es sind darüber hinaus am Axiallagerungsbereich 48 des Strömungsleitelementes 40 Schmierausnehmungen 114, 115 vorgesehen, und zwar mit Winkelversatz gegenüber den Strömungsdurchlässen 52 und 55. Die Schmierausnehmungen 114 greifen vom radialen Außenbereich des Strömungsleitelementes 40 nach radial innen, die Schmierausnehmungen 115 dagegen vom radialen Innenbereich des Strömungsleitelementes 40 nach radial außen, und zwar mit Winkelversatz gegenüber den erstgenannten Schmierausnehmungen 114. Allen Schmierausnehmungen 114, 115 gemeinsam ist, dass sie nicht radial durchgängig sind, und somit nicht die Funktion der Versorgung des Druckraumes mit Strömungsmittel bewirken. Die Schmierausnehmungen 114, 115 sollen dafür sorgen, dass sich axial zwischen dem Axiallagerungsbereich 48 des Strömungsleitelementes 40 und der Axialanlagefläche 50 (vgl. Fig. 6) der antriebsseitigen Gehäusewandung 7 ein Schmierfilm aufbauen kann, der für eine reibungsarme Relativbewegbarkeit des Strömungsleitelementes 40 gegenüber der antriebsseitigen Gehäusewandung 7 sorgt. Für die Versorgung des Druckraums 46 mit Strömungsmittel sind somit allein die ersten Strömungsdurchlässe 52 zuständig, die bei dieser Ausführung des Strömungsleitelementes 40 als Radialdurchgänge 112 ausgebildet sind. Weiterhin sichtbar ist in Fig. 7 oder 8 die äußere radiale Dichtungsausnehmung 73 sowie, allein in Fig. 8, die innere radiale Dichtungsausnehmung 74.

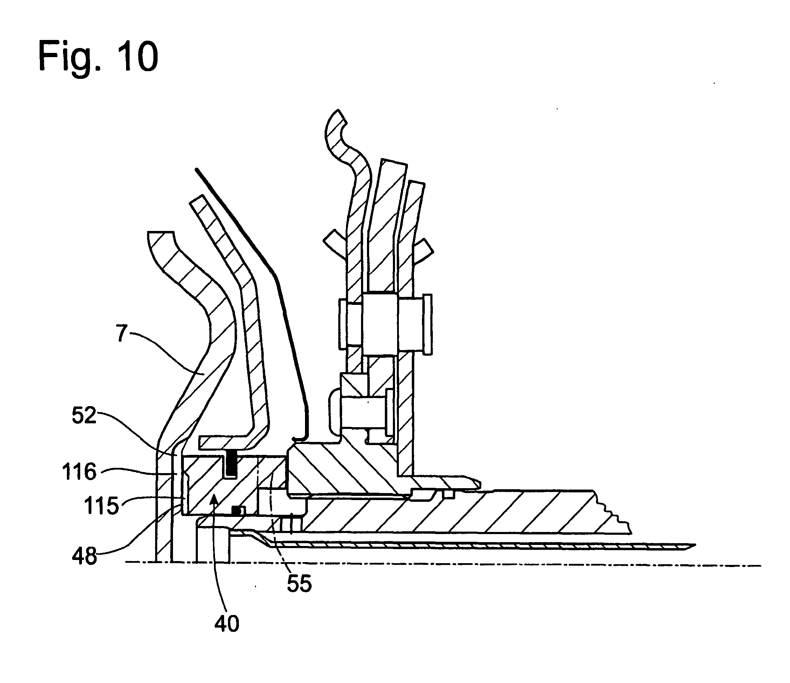

Auch bei der Ausführung des Strömungsleitelementes 40 gemäß Fig. 10 sind am Axiallagerungsbereich 48 Schmierausnehmungen vorgesehen, wobei in dem dargestellten Schnitt lediglich eine Schmierausnehmung 115 erkennbar ist. Zur Bildung der ersten Strömungsdurchlässe 52 sind allerdings Radialdurchgänge 116 im antriebsseitigen Gehäusedeckel 7 vorgesehen, und zwar an der dem Axiallagerungsbereich 48 des Strömungsleitelementes 40 zugewandten Seite. Die Radialdurchgänge 116 können beispielsweise in Form von Nutungen gebildet sein, die durch Tiefziehen oder Anprägen in den antriebsseitigen Gehäusedeckel 7 eingebracht sind.

### Bezugszeichenliste

| | | | |
|---|---|---|---|
| 1. | hydrodyn. Kopplungsvorrichtung | 31. | Turbinenradfuss |
| 3. | Drehachse | 32 | Verzahnung |
| 5. | Kupplungsgehäuse | 33. | Nabe |
| 7. | antriebsseitige Gehäusewandung | 34 | Verzahnung |
| 9. | Pumpenradschale | 35. | Axiallagerung |
| 11. | Pumpenradnabe | 36. | Getriebeeingangswelle |
| 12. | Bauteil eines TD | 37. | Mittenbohrung |
| 13. | Lagerzapfen | 38. | Abdichtung |
| 15. | Befestigungsaufnahme | 39. | Abdichtung |
| 16 | Pumpenradschaufeln | 40. | Strömungsleitelement |
| 17. | Pumpenrad | 41. | Drehsicherung |
| 19. | Turbinenrad | 43. | Hülse |
| 21. | Turbinenradschale | 44. | Versorgungsraum |
| 22 | Turbinenradschaufeln | 45. | Abstützbereiche der Hülse |
| 23. | Leitrad | 46. | Druckraum |
| 24. | hydrodynamischer Kreis | 47. | zentraler Versorgungskanal |
| 25. | Innentorus | 48. | Axiallagerungsbereich des Ström. |
| 26. | Leitradnabe | 49. | Trennplatte |
| 27. | Freilauf | 50. | Axialanlagefläche |
| 28 | Leitradschaufeln | 52. | erste Strömungsdurchlässe |
| 29. | Axiallagerung | 54. | Kolben |
| 30. | Stützwelle | | |
| 55. | zweite Strömungsdurchlässe | 92. | abtriebsseitige Nabenscheibe |
| 56. | Überbrückungskupplung | 94. | Umfangsfedersatz |
| 58. | erster Versorgungskanal | 96. | Deckblech |
| 60. | zweiter Versorgungskanal | 98. | Deckblech |
| 63 | Nietverbindung | 100. | radial benachbarter Bereich |
| 64. | Innenlamellenträger | 102. | Bogenverlauf |
| 65. | Kupplungsvorrichtung | 104, 105 | Verzahnungselemente |
| 66. | innere Kupplungselemente | 106, 107 | Verzahnungselemente |
| 68. | äußere Kupplungselemente | 108, 109 | Verzahnungen |
| 69. | Außenlamellenträger | 110. | Abtrieb |
| 70. | Verzahnung | 112. | Radialdurchgänge |
| 72. | Verzahnung | 114. | Schmierausnehmungen |
| 73. | Dichtungsausnehmung | 116. | Radialdurchgänge |
| 74. | Dichtungsausnehmung | 118. | Elastomerring |
| 76 | Axiallagerung | 120. | Dichtspalt |
| 78. | Axialausnehmung | | |
| 80 | erster abtriebsseit. Strömungsweg | | |
| 82. | zweiter abtriebseit. Strömungsweg | | |
| 83. | Axialanlagerelement | | |
| 84. | dritter abtriebseit. Strömungsweg | | |
| 85. | Nutungen | | |
| 86. | Abdichtung | | |
| 88. | Verzahnung | | |
| 90. | Torsionsschwingungsdämpfer | | |

## Patentansprüche

1. Hydrodynamische Kopplungsvorrichtung (1) mit einem zumindest durch ein Pumpenrad (17) und ein Turbinenrad (19) gebildeten hydrodynamischen Kreis (24) in einem Kupplungsgehäuse (5) und mit einer Überbrückungskupplung (56), die einen mit einer antriebsseitigen Gehäusewandung (7) des Kupplungsgehäuses (5) verbindbaren, in Achsrichtung zu einer Auslenkbewegung befähigten Kolben (54) aufweist, wobei das Turbinenrad (19) zumindest in Achsrichtung mit einer Nabe (33) in Wirkverbindung steht, die mit einem Abtrieb (110) drehverbunden ist, sich einerseits an einem Bauteil (23) des hydrodynamischen Kreises (24) abstützt und andererseits mit dem Kupplungsgehäuse (5) in axialer Wirkverbindung steht, und mit einer Mehrzahl abtriebsseitiger Strömungswege (80, 82, 84), von denen wenigstens ein erster abtriebsseitiger Strömungsweg (80) mittels erster Strömungsdurchlässe (52) mit einem Druckraum (46) verbunden ist, der zumindest im wesentlichen durch die antriebsseitige Gehäusewandung (7) des Kupplungsgehäuses (5) sowie den Kolben (54) begrenzt ist, während zumindest ein zweiter abtriebsseitiger Strömungsweg (82) mittels zweiter Strömungsdurchlässe (55) mit einem Versorgungsraum (44) verbunden ist, der an die vom Druckraum (46) abgewandte Seite des Kolbens (54) angrenzt, wobei der Nabe (33) ein Strömungsleitelement (40) zugeordnet ist, das zumindest die ersten Strömungsdurchlässe (52) aufweist, und das axial zwischen der Nabe (33) und der antriebsseitigen Gehäusewandung (7), die zur Bildung einer Axialabstützung zumindest im Wesentlichen bis an eine Drehachse (3) des Kupplungsgehäuses (5) nach radial innen gezogen ist, positioniert ist, so dass das Strömungsleitelement (40) mit seinem der antriebsseitigen Gehäusewandung (7) zugewandten, als Axiallagerungsbereich (48) ausgebildeten antriebsseitigen Ende in Axialanlage mit einer Axiallagerung (76) versetzbar ist, die entweder als Axialanlagefläche (50) an der antriebsseitigen Gehäusewandung (7) vorgesehen ist, oder aber der antriebsseitigen Gehäusewandung (7) zugeordnet ist,
**dadurch gekennzeichnet,**
**dass** das Strömungsleitelement (40) auch zumindest die zweiten Strömungsdurchlässe (55) aufweist, dass die Nabe (33) zur Befestigung eines Bauteils (12) eines Torsionsschwingungsdämpfers (90) dient, und dass zwischen dem Kolben (54) und dem Torsionsschwingungsdämpfer (90) eine Trennplatte (49) vorgesehen ist, die den hydrodynamischen Kreis (24) von dem Versorgungsraum (44) isoliert, wobei der Versorgungsraum (44) axial durth den kolben (54) und die Trennplatte (49) begrenzt ist.

2. Hydrodynamische Kopplungsvorrichtung nach Anspruch 1, bei welcher die Axialanlagefläche (50) in einer Axialausnehmung (78) der antriebsseitigen Gehäusewandung (7) vorgesehen ist,
**dadurch gekennzeichnet,**
**dass** die Axialausnehmung (78) der antriebsseitigen Gehäusewandung (7) in Radialrichtung über die Erstreckungsweite des benachbarten Axiallagerungsbereichs (48) des Strömungsleitelementes (40) hinaus reicht, und zumindest im wesentlichen mittels eines Bogenverlaufes (102) von der Axialanlagefläche (50) in den radial benachbarten Bereich (100) der antriebsseitigen Gehäusewandung (7) überführt.

3. Hydrodynamische Kopplungsvorrichtung nach Anspruch 2,
**dadurch gekennzeichnet,**
**dass** die Axialausnehmung (78) zur Aufnahme eines Axialanlagerelementes (83) dient, das aus einem Federstahl besteht.

4. Hydrodynamische Kopplungsvorrichtung nach Anspruch 1,
**dadurch gekennzeichnet,**
**dass** das Strömungsleitelement (40) zur unmittelbaren Aufnahme des Kolbens (54) der Überbrückungskupplung dient und eine gegenüber dem Kolben (54) wirksame Abdichtung (38) aufweist.

5. Hydrodynamische Kopplungsvorrichtung nach Anspruch 1, bei welcher das Strömungsleitelement (40) mit einer gegenüber dem Abtrieb (110) wirksamen Abdichtung (39) ausgebildet ist,
**dadurch gekennzeichnet,**
**dass** die Abdichtung (39) durch einen in eine Dichtungsausnehmung (74) eingesetzten Elastomerring (118) gebildet ist.

6. Hydrodynamische Kopplungsvorrichtung nach einem der Ansprüche 1 bis 5, bei welcher zur Bildung der ersten Strömungsdurchlässe in vorbestimmtem Abstand zur antriebsseitigen Gehäusewandung Radialdurchgänge vorgesehen sind,
**dadurch gekennzeichnet,**
**dass** das Strömungsleitelement (40) die Radialdurchgänge (112) in vorbestimmtem Abstand zu seinem Axiallagerungsbereich (48) aufweist, und darüber hinaus an seinem Axiallagerungsbereich (48) über Schmierausnehmungen (114, 115) verfügt.

7. Hydrodynamische Kopplungsvorrichtung nach Anspruch 1, bei welcher das Strömungsleitelement (40) über eine Drehsicherung (41) mit der Nabe (33) in drehfester Verbindung steht,
**dadurch gekennzeichnet,**
**dass** die Drehsicherung (41) durch eine Verzahnung (108) gebildet wird, für welche am Strömungsleitelement (40) an dessen der Nabe (33) zugewandten Seite erste Verzahnungselemente (104) und an der Nabe (33) an deren dem Strömungsleitelement (40) zugewandten Seite zweite Verzahnungselemente (106) vorgesehen sind.

8. Hydrodynamische Kopplungsvorrichtung nach Anspruch 1,
**dadurch gekennzeichnet,**
**dass** das Strömungsleitelement (40) über eine Drehsicherung (41) mit der Axiallagerung (76) an der antriebsseitigen Gehäusewandung (7) in drehfester Verbindung steht.

9. Hydrodynamische Kopplungsvorrichtung nach Anspruch 8,
**dadurch gekennzeichnet,**
**dass** die Drehsicherung (41) durch eine Verzahnung (109) gebildet wird, für welche am Strömungsleitelement (40) an dessen der Axiallagerung (76) der antriebsseitigen Gehäusewandung (7) zugewandten Seite erste Verzahnungselemente (105) und an der Axiallagerung (76) an deren dem Strömungsleitelement (40) zugewandten Seite zweite Verzahnungselemente (107) vorgesehen sind.

## Claims

1. Hydrodynamic coupling device (1), with a hydrodynamic circuit (24) formed at least by a pump wheel (17) and a turbine wheel (19) and located in a clutch housing (5), and with a lock-up clutch (56) which has a piston (54) connectable to a drive-side housing wall (7) of the clutch housing (5) and capable of a deflecting movement in the axial direction, the turbine wheel (19) being operatively connected at least in the axial direction to a hub (33) which is connected rotationally to an output (110), is supported, on the one hand, on a component (23) of the hydrodynamic circuit (24) and, on the other hand, is operatively connected axially to the clutch housing (5), and with a plurality of output-side flow paths (80, 82, 84), of which at least one first output-side flow path (80) is connected by means of first flow passages (52) to a pressure space (46) which is delimited at least essentially by the drive-side housing wall (7) of the clutch housing (5) and by the piston (54), while at least one second output-side flow path (82) is connected by means of second flow passages (55) to a supply space (44) which is adjacent to that side of the piston (54) which faces away from the pressure space (46), the hub (33) being assigned a flow guide element (40) which has at least the first flow passages (52) and which is positioned axially between the hub (33) and the drive-side housing wall (7) which, to form an axial support, is drawn radially inwards at least essentially up to an axis of rotation (3) of the clutch housing (5), so that the flow guide element (40) can be displaced, with its drive-side end facing the drive-side housing wall (7) and designed as an axial mounting region (48), into axial bearing contact with an axial mounting (76) which either is provided as an axial bearing surface (50) on the drive-side housing wall (7) or else is assigned to the drive-side housing wall (7),
**characterized**
**in that** the flow guide element (40) also has at least the second flow passages (55), in that the hub (33) serves for fastening a component (12) of a torsional vibration damper (90), and in that, between the piston (54) and the torsional vibration damper (90), a separating plate (49) is provided which isolates the hydrodynamic circuit (24) from the supply space (44), the supply space (44) being delimited axially by the piston (54) and the separating plate (49).

2. Hydrodynamic coupling device according to Claim 1, in which the axial bearing surface (50) is provided in an axial recess (78) of the drive-side housing wall (7),
**characterized**
**in that** the axial recess (78) of the drive-side housing wall (7) extends in the radial direction beyond the width of extent of the adjacent axial mounting region (48) of the flow guide element (40) and leads over, at least essentially by means of an arcuate profile (102), from the axial bearing surface (50) into the radially adjacent region (100) of the drive-side housing wall (7).

3. Hydrodynamic coupling device according to Claim 2,
**characterized**
**in that** the axial recess (78) serves for receiving an axial bearing element (83) which consists of a spring steel.

4. Hydrodynamic coupling device according to Claim 1,
**characterized**
**in that** the flow guide element (40) serves for the direct reception of the piston (54) of the lock-up clutch and has a seal (38) active with respect to the piston (54).

5. Hydrodynamic coupling device according to Claim 1, in which the flow guide element (40) is formed with a seal (39) active with respect to the output (110),
**characterized**
**in that** the seal (39) is formed by an elastomeric ring (118) inserted into a seal recess (74).

6. Hydrodynamic coupling device according to one of Claims 1 to 5, in which radial pathways are provided at a predetermined distance from the drive-side housing wall in order to form the first flow passages,
**characterized**
**in that** the flow guide element (40) has the radial pathways (112) at a predetermined distance from its axial mounting region (48) and, furthermore, has lubricating recesses (114, 115) on its axial mounting region (48).

7. Hydrodynamic coupling device according to Claim 1, in which the flow guide element (40) is connected fixedly in rotation to the hub (33) via an anti-twist arrangement (41),
**characterized**
**in that** the anti-twist arrangement (41) is formed by a toothing (108), for which first toothing elements (104) are provided on the flow guide element (40) on its side facing the hub (33) and second toothing elements (106) are provided on the hub (33) on its side facing the flow guide element (40)

8. Hydrodynamic coupling device according to Claim 1,
**characterized**
**in that**
the flow guide element (40) is connected fixedly to the rotation to the axial mounting (76) on the drive-side housing wall (7) via an anti-twist arrangement (41).

9. Hydrodynamic coupling device according to Claim 8,
**characterized**
**in that** the anti-twist arrangement (41) is formed by a toothing (109), for which first toothing elements (105) are provided on the flow guide element (40) on which side facing the axial mounting (76) of the drive-side housing wall (7) and second toothing elements (107) are provided on the axial mounting (76) on which side facing the flow guide element (40).

## Revendications

1. Dispositif d'accouplement hydrodynamique (1) comprenant un circuit hydrodynamique (24) formé au moins par une roue de pompe (17) et une roue de turbine (19) dans un boîtier d'embrayage (5) et un embrayage de pontage (56) qui présente un piston (54) pouvant être relié à une paroi de boîtier (7) du boîtier d'embrayage (5) du côté de l'entraînement et capable d'effectuer un mouvement de déviation dans la direction axiale, la roue de turbine (19) étant en liaison fonctionnelle au moins dans la direction axiale avec un moyeu (33) qui est connecté de manière rotative à une prise de force (110), s'appuie d'une part sur un composant (23) du circuit hydrodynamique (24) et est d'autre part en liaison fonctionnelle axiale avec le boîtier d'embrayage (5), et une pluralité de voies d'écoulement (80, 82, 84) du côté de la prise de force, dont au moins une première voie d'écoulement (80) du côté de la prise de force est connectée au moyen de premiers passages d'écoulement (52) à un espace de pression (46), qui est limité au moins essentiellement par la paroi de boîtier (7) du boîtier d'embrayage (5) du côté de l'entraînement ainsi que par le piston (54), tandis qu'au moins une deuxième voie d'écoulement (82) du côté de la prise de force est connectée au moyen de deuxièmes passages d'écoulement (55) à un espace d'alimentation (44) qui est adjacent au côté du piston (54) opposé à l'espace de pression (46), le moyeu (33) étant associé à un élément de guidage de l'écoulement (40) qui présente au moins les premiers passages d'écoulement (52), et qui est positionné axialement entre le moyeu (33) et la paroi de boîtier (7) du côté de l'entraînement qui est rentrée radialement vers l'intérieur pour former un support axial au moins essentiellement jusqu'à un axe de rotation (3) du boîtier d'embrayage (5), de sorte que l'élément de guidage de l'écoulement (40) puisse être amené, avec son extrémité du côté de l'entraînement tournée vers la paroi de boîtier (7) du côté de l'entraînement, réalisée sous forme de région de palier axial (48), en appui axial avec un palier axial (76), qui est soit prévu sous forme de surface d'appui axial (50) sur la paroi de boîtier (7) du côté de l'entraînement, soit associé à la paroi de boîtier (7) du côté de l'entraînement,
**caractérisé en ce que**
l'élément de guidage de l'écoulement (40) présente aussi au moins les deuxièmes passages d'écoulement (55), **en ce que** le moyeu (33) sert à la fixation d'un composant (12) d'un amortisseur d'oscillations de torsion (90), et **en ce qu'**entre le piston (54) et l'amortisseur d'oscillations de torsion (90) est prévue une plaque de séparation (49) qui isole le circuit hydrodynamique (24) de l'espace d'alimentation (44), l'espace d'alimentation (44) étant limité axialement par le piston (54) et la plaque de séparation (49).

2. Dispositif d'accouplement hydrodynamique selon la revendication 1, dans lequel la surface d'appui axial (50) est prévue dans un évidement axial (78) de la paroi de boîtier (7) du côté de l'entraînement,
**caractérisé en ce que**
l'évidement axial (78) de la paroi de boîtier (7) du côté de l'entraînement s'étend dans la direction radiale sur l'étendue de la région de palier axial adjacente (48) de l'élément de guidage de l'écoulement (40), et passe au moins essentiellement au moyen d'une allure courbe (102) de la surface d'appui axial (50) à la région radialement adjacente (100) de la paroi de boîtier (7) du côté de l'entraînement.

3. Dispositif d'accouplement hydrodynamique selon la revendication 2,
**caractérisé en ce que**
l'évidement axial (78) sert à recevoir un élément d'appui axial (83) qui se compose d'un acier à ressort.

4. Dispositif d'accouplement hydrodynamique selon la revendication 1,
**caractérisé en ce que**
l'élément de guidage de l'écoulement (40) sert à recevoir directement le piston (54) de l'embrayage de pontage et présente une garniture d'étanchéité (38) agissant par rapport au piston (54).

5. Dispositif d'accouplement hydrodynamique selon la revendication 1, dans lequel l'élément de guidage de l'écoulement (40) est réalisé avec une garniture d'étanchéité (39) agissant par rapport à la prise de force (110),
**caractérisé en ce que**
la garniture d'étanchéité (39) est formée par une bague en élastomère (118) insérée dans un évidement d'étanchéité (74).

6. Dispositif d'accouplement hydrodynamique selon l'une quelconque des revendications 1 à 5, dans lequel pour la formation des premiers passages d'écoulement à une distance prédéterminée de la paroi de boîtier du côté de l'entraînement, on prévoit des passages radiaux,
**caractérisé en ce que**
l'élément de guidage de l'écoulement (40) présente les passages radiaux (112) à distance prédéterminée de sa région de palier axial (48), et dispose en outre sur sa région de palier axial (48) d'évidements de lubrification (114, 115).

7. Dispositif d'accouplement hydrodynamique selon la revendication 1 dans lequel l'élément de guidage d'écoulement (40) est en liaison solidaire en rotation avec le moyeu (33) par le biais d'une fixation contre la rotation (41),
**caractérisé en ce que**
la fixation contre la rotation (41) est formée par une denture (108) pour laquelle sont prévus, sur l'élément de guidage de l'écoulement (40) sur son côté tourné vers le moyeu (33), des premiers éléments de denture (104), et sur le moyeu (33) sur son côté tourné vers l'élément de guidage de l'écoulement (40), des deuxièmes éléments de denture (106).

8. Dispositif d'accouplement hydrodynamique selon la revendication 1,
**caractérisé en ce que**
l'élément de guidage de l'écoulement (40) est en liaison solidaire en rotation par le biais d'une fixation contre la rotation (41) avec le palier axial (76) au niveau de la paroi de boîtier (7) du côté de l'entraînement.

9. Dispositif d'accouplement hydrodynamique selon la revendication 8,
**caractérisé en ce que**
la fixation contre la rotation (41) est formée par une denture (109) pour laquelle sont prévus, sur l'élément de guidage de l'écoulement (40) sur son côté tourné vers le palier axial (76) de la paroi de boîtier (7) du côté de l'entraînement des premiers éléments de denture (105) et sur le palier axial (76) sur son côté tourné vers l'élément de guidage de l'écoulement (40), des deuxièmes éléments de denture (107).
